# EUROPEAN PATENT SPECIFICATION

(11) **EP 3 548 751 B1**
(45) Date of publication and mention of the grant of the patent: **06.01.2021**
(21) Application number: 17818620.1
(22) Date of filing: 27.11.2017
(51) Int. Cl.: F04F 5/20, F16K 11/07, F16K 11/02

(54) **VALVE FOR THE DISTRIBUTION OF A PRESSURIZED FLUID**
VENTIL ZUR VERTEILUNG EINER UNTER DRUCK STEHENDEN FLÜSSIGKEIT
SOUPAPE DESTINÉE À LA DISTRIBUTION D'UN FLUIDE SOUS PRESSION

(30) Priority: 29.11.2016 IT 201600120995
(43) Date of publication of application: 09.10.2019
(73) Proprietor: Dueffe S.r.l., 28100 Novara (NO) (IT)
(72) Inventor: FRANCIA, Marco, 28100 Novara (NO) (IT)
(74) Representative: Valentini, Giuliano
(86) International application number: PCT/IB2017/057416
(87) International publication number: WO 2018/100479

(56) References cited:
- WO-A1-2010/077143
- CH-A- 473 024
- US-A- 5 437 301
- US-A1- 2005 087 559
- US-A1- 2010 006 176

## Description

### Field of the invention

The present invention relates in general to a valve for the distribution of a pressurized fluid.

Such a valve is particularly applied in inflating and deflating the pneumatic seal of a floating lid in a tank for the wine preservation and maturation.

### Prior Art

Tanks provided with floating lids are very popular in the wine sector. Tanks for the wine preservation and maturation generally have cylindrical shape and are closed on top by a circle-shaped floating lid provided with a perimetrical pneumatic seal generally being in a toroidal shape. The floating lid thus positions itself at various heights depending on the wine level in the tank. For example, in order to carry out the wine tapping from the tank, the pneumatic seal sags such that the floating lid may descend as the wine level drops. When the tapping finishes, the pneumatic seal is inflated again, for example by means of a manually operable pump, to sealingly close the tank and preserve the wine from dust and other atmospheric agents that can impair its proper preservation.

A floating lid provided with a pneumatic seal for a liquid food tank is described for example in the Swiss Patent Application N. CH473024.

Inflating and deflating the seal can be carried out through convenient apparatuses. For example, the Italian Patent Application N. 20323A/77 describes a pump-distributor arrangement wherein a double acting pump is selectively used both for inflating and deflating a pneumatic seal depending on the setting of the distributor assembly combined with the pump itself. A pressure gauge is installed on the distributor assembly in order to measure the air pressure in the pneumatic seal.

It is apparent that similar devices of the known art can be effectively used only in small size cellars where there are few tanks, whose airtightness of the pneumatic seals applied to the floating lids has to be monitored. In case of large size cellars, thus having a high number of tanks to be monitored and possibly also distributed in several spaced-apart sites, the monitoring of the airtightness of the pneumatic seals of the lids of each tank is very difficult.

Constantly maintaining control over the inflating state of the pneumatic seal is therefore required in order to avoid leaks in the seal that could impair the hermetic seal of the tank and, as a result, compromise the wine preservation.

In any case, in cellars with high grade wines, regardless of the number of tanks for the preservation of these wines, the constant monitoring of the airtightness of the pneumatic seals of the lids of each tank is practically indispensable in order to avoid economic damages resulting from poor wine conservation.

However, it has to be considered that the toroidal pneumatic seals can be fitted in convenient perimeter seats of the lid, which have semicircular section. When the deflating is carried out, the inner pressure of the seal has to be brought to very low values in order for the seal to return as much as possible into the peripheral seat of the lid. In fact, in case the deflating was not shallow enough, the seal could protrude and be unfitted from the seat as a consequence of the movement imparted to the lid.

It is further worth noting that the pneumatic seals currently commercially available are made with various materials having different elasticity and texture characteristics. Accurately and effectively controlling not only the inflating pressure of each single pneumatic seal, but also the deflating pressure depending on the material each single pneumatic seal is made of, is therefore required.

WO 2010/077143 describes a valve for the distribution of a pressurized fluid provided with a vacuum generator device to inflate and deflate an inflatable object.

### Summary of the Invention

That being stated, task of the present invention is to overcome the limits of the know art by providing a valve for the distribution of a pressurized fluid that simply and rapidly allows carrying out the operations of feeding and withdrawing a fluid from a container, as well as settings of the feeding and maintenance pressures of the fluid in the container.

Particular object of the present invention is to provide a valve of the afore mentioned type that can be advantageously used to carry out the inflating and deflating of a pneumatic seal applied to a floating lid of a tank for the wine preservation and maturation.

Another object of the present invention is to provide a valve of the afore mentioned type that allows constantly monitoring the state, and in particular the inflating pressure, of the pneumatic seal of a lid floating in a tank for the wine preservation and conservation, as well as signaling possible anomalies of the pneumatic seals and/or valves themselves.

Still another object of the present invention is to provide a valve that can be equally fed with pressurized air by different pressurized air supplies, such as for example a distribution system connected to a plurality of valves or a manual pump combined with each valve.

A further object of the present invention is to provide a plant that allows constantly and simultaneously monitoring a large number of pneumatic seals belonging to the floating lids of as many tanks for the wine preservation and maturation.

These objects are achieved by the present invention thanks to a valve for the distribution of a pressurized fluid according to claim 1.

In an embodiment, the valve comprises:
- a valve body;
- at least one inlet port to feed a pressurized fluid to the valve;
- at least one outlet port to feed the pressurized fluid to a container through a feed channel;
- at least one distribution member movably housed in a distribution chamber obtained in the valve body, wherein the distribution member is movable among at least one predetermined closure position of the feed of the pressurized fluid to the valve, at least one predetermined feed position of the pressurized fluid to the container and at least one predetermined suction position of the fluid from the container. At least one vacuum generator device is housed in the valve body to suction the fluid from the container upon the pressurized fluid being fed to the valve when the distribution member is in the suction position of the fluid from the container.

In the valve according to the invention, the distribution chamber ends with a channel communicating with a pressure measuring port and the outlet port and the distribution member, which is axially movable in the distribution chamber, comprises a plug at its end. When the distribution member is in the predetermined closure position of the pressurized fluid feed, the plug advantageously insulates the channel located at the end of the distribution chamber from the pressurized fluid fed to the valve.

In practice, thanks to the vacuum generator device, both the step of feeding the pressurized fluid to the container and the step of withdrawing the fluid from the container can be easily carried out always using the same pressurized fluid. For example, in the exemplary case of applying the valve for the inflating and deflating of a pneumatic seal, the pressurized air may be provided from the pressurized air distribution system, or by a single-acting pump generally available with the tanks provided with floating lid and pneumatic seal. The vacuum generator device, which acts based on the Venturi effect, further allows particularly large deflating pressures to be obtained, thus limiting the risk for the pneumatic seal of being unfitted from the lid.

The plug arranged at the end of the distribution member, at the time the valve is closed, allows completely insulating the communication ports of the pneumatic seal and pressure control from the pressurized fluid feed. This way, the controlled pressure of the valve is ensured to be effectively that one present in the pneumatic seal, thus preventing possible undesired pressurized air leakages in the valve from causing pressure imbalances in the pneumatic seal.

The valve body further comprises at least one discharge channel to evacuate in the atmosphere the pressurized fluid fed to the vacuum generator device together with the fluid suctioned from the container.

The distribution member includes at least one knob outwardly protruding from the valve body. The knob can be rotationally operable to cause the axial movement of the distribution member among the various predetermined positions.

In order to ease the use of the valve, the knob of the distribution member may comprise at least one reference mark to indicate the rotation position with respect to the valve body. Releasable stop means are further provided to stop the rotation of the knob at the various predetermined positions.

In an embodiment, the distribution member has a substantially cylindrical shape and advantageously includes at least one double- or multiple-start threaded portion engaged with a corresponding threaded portion obtained in the distribution chamber.

The use of a double- or multiple-start thread for transforming the knob rotatory motion into an axial motion of the distribution member allows rapidly and easily switching among the various predetermined positions of the distribution member. Reduced angular displacements of the knob are thus required to obtain rapid axial movements of the distribution member among the various predetermined positions.

At the inlet port receiving the feed of the pressurized fluid to the valve at least one joint can be connected, which is provided with a one-way valve.

At the inlet port receiving the pressurized fluid feed to the valve a pressure regulator can also be connected, for example to reduce the system pressure to values similar to those obtainable with a manually operated pump, such to make the valve suitable to equally receive the fluid feed from both the supplies. The pressure regulator can be possibly embedded in the joint connected to the inlet port and provided with the one-way valve.

At least one pressure controlling device is advantageously connected to the pressure measuring port through a measuring channel. The connection of the pressure controlling device can also be made through a push-in fitting to allow the rotation of the pressure controlling device in the most suitable reading position with respect to the valve body, or to allow it to be replaced in case of malfunction without impairing the valve operation.

The pressure controlling device is an electronic device including a programmable control unit, a plurality of buttons to manage the functions of the pressure controlling device, at least one alphanumeric digital display to show numerical values and one or more light and/or acoustic signaling means to signal the operating states of the valve and/or pressure controlling device. This allows constantly keeping the pressure of the fluid in the container controlled, by signaling possible pressure drops or other anomalies of the controlling device itself, for example a decay of the electrical supply to the device circuits.

The programmable control unit advantageously comprises at least one circuit section to exchange data and/or driving signals in wireless or Wi-Fi mode with one or more remote monitoring apparatuses. This allows constantly and even remotely controlling the operation and fluid pressure state in the containers.

It is a further object of the invention also a plant having a plurality of tanks for the wine conservation and maturation, the plant further comprising a system for monitoring the state of pneumatic seals of floating lids of the plurality of tanks. A valve for the distribution of a pressurized fluid according to the invention is combined with the pneumatic seal of each of the tanks, and each valve is connected to a container consisting of a pneumatic seal and to a supply of pressurized fluid made of air. The plant advantageously comprises at least one remote control station programmed for receiving the signals transmitted by the electronic pressure controlling devices belonging to each valve and for transmitting, in turn, warning and/or alarm signals to one or more remote communication devices. This allows keeping a centralized control of a large number of tanks of a cellar, which are possibly also deployed in different sites, signaling possible faults or anomalies to the operators in order to allow them promptly intervening to remove the drawbacks. At the remote station a synoptic panel can be advantageously installed, visually illustrating in real time the conditions of the floating lids in the tanks.

In any case the pressurized air feed source, for all the valves of the plant, can be ensured by a pressurized air distribution system and/or a simple-acting pump combined with each tank for the wine preservation and maturation.

### Brief Description of the Drawings

Further characteristics and advantages of the present invention will be more evident from the following description, made for illustration purposes only and without limitation, referring to the accompanying drawings in which:
- Figure 1 is an exploded view of a valve according to an embodiment of the present invention;
- Figure 2 is a longitudinal sectional view according to an axial plane of the valve body of the valve of Figure 1;
- Figure 3 is a cross sectional view of the valve body according to the plane III-III of Figure 2;
- Figure 4 is a cross sectional view of the valve body according to the plane IV-IV of Figure 2;
- Figure 5 is a longitudinal sectional view according to an axial plane of the distribution member of the valve in Figure 1;
- Figure 6 is a front view of the valve of Figure 1 in assembled condition;
- Figure 7 is a sectional view according to the plane X-X of Figure 6 of the valve in a first operative condition;
- Figure 8 is a sectional view according to the plane X-X of Figure 6 of the valve in a second operative condition;
- Figure 9 is a sectional view according to the plane X-X of Figure 6 of the valve in a third operative condition; and
- Figure 10 is a schematic view of a plant for the monitoring of the state of the pneumatic seals of the floating lids of a plurality of tanks for the wine preservation and maturation, wherein valves such as the one represented in Figures 1 to 9 are used.

### Detailed Description

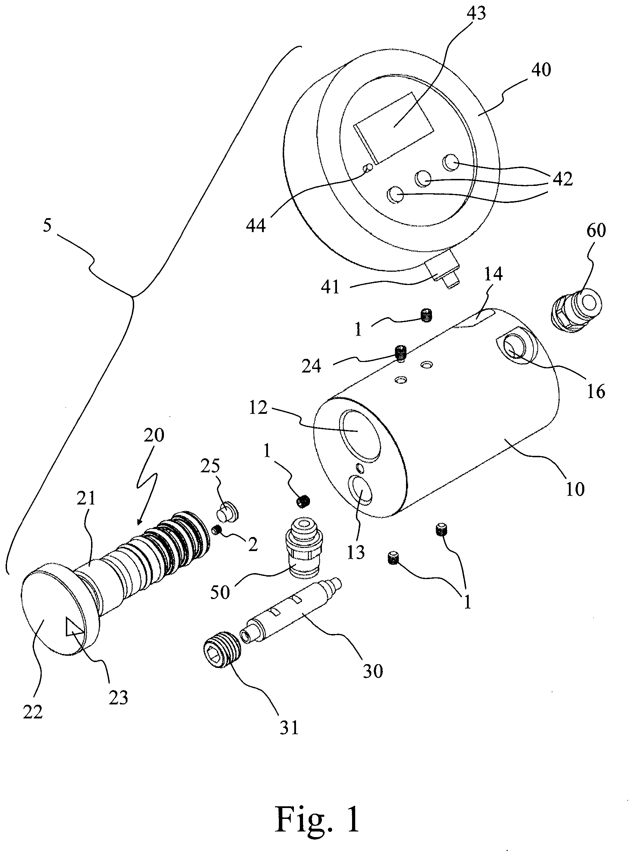

In the exploded view of Figure 1 a valve 5 for the distribution of a pressurized fluid is depicted. The valve 5 comprises a valve body 10, a distribution member 20, a vacuum generator device 30 and a pressure controlling device 40.

In the valve body 10 there are inner channels whose machined holes are closed by threaded plugs 1 made, for example, in form of headless screws or the like.

The distribution member 20 is movably housed in a distribution chamber 12 obtained in the valve body 10 and has a substantially cylindrical shape. Specifically, the distribution member 20 is axially movable inside the distribution chamber 12 among different predetermined positions, that will be described more in detail in the following. The axially movement of the distribution member 20 is obtained as a consequence of the rotation of the member itself thanks to a threaded portion 21, with double- or multiple- start thread, engaged in a corresponding threaded portion obtained in the distribution chamber 12.

The rotation of the distribution member 20 is imparted through a knob 22 outwardly protruding from the valve body 10. The knob 22 of the distribution member 20 comprises for example at least one reference mark 23 to indicate the rotation position thereof with respect to the valve body 10. A positioning headless screw 24, provided for example with a sphere pushed by an elastic means and intended to be engaged in grooves suitably obtained on the distribution member 20, acts as a releasable stop means to stop the rotation at the predetermined axial portions for the distribution member 20.

At the end opposite to that of the knob 22, the distribution member 20 comprises a plug 25 made for example of plastic material and intended to abut against an inner wall of the chamber 12, as well as a threaded plug 2 intended to seal a machined hole of a channel inside the distribution member 20.

The vacuum generator device 30 is housed in turn in a chamber 13 extending in the valve body 10 with axis parallel to the axis of the chamber 12. A threaded plug 31 closes the chamber 13 where the vacuum generator device 30 is housed.

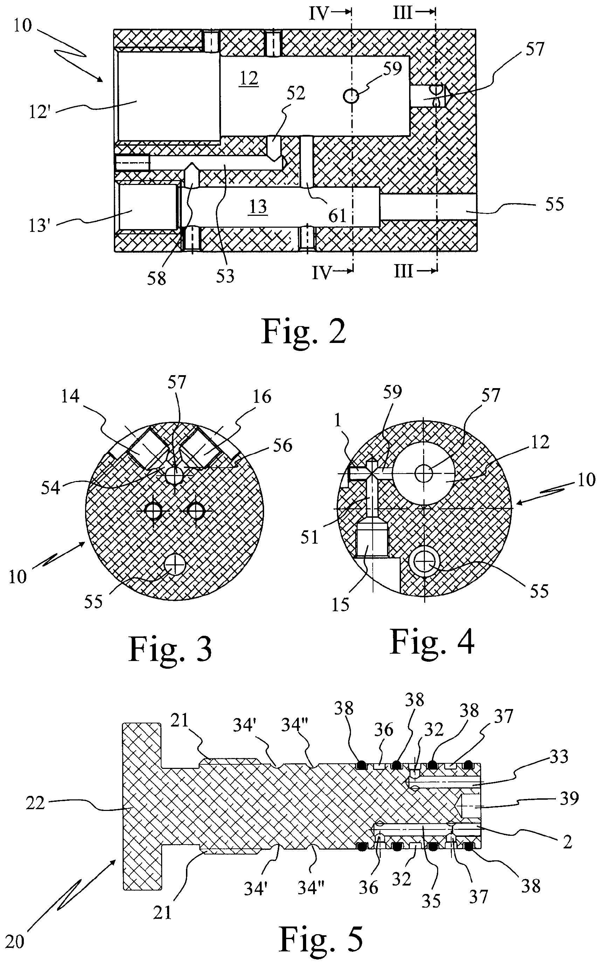

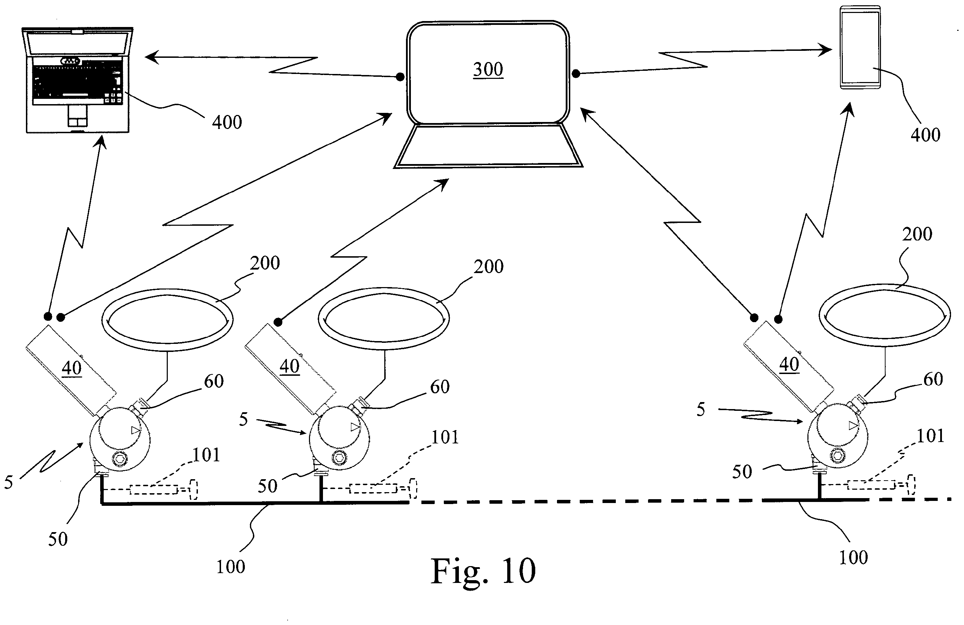

The valve body 10 comprises an inlet port 15 (Figure 4) to which a joint 50 is connected preferably provided with one-way valve, to feed a pressurized fluid to the valve 5, and an outlet port 16 to which a joint 60 is connected to feed the pressurized fluid to a container 200, such as for example a pneumatic seal (Figure 10), and to withdraw the fluid from the container, i.e. bring the fluid to the container in depression conditions. Upstream of the inlet port 15 a pressure regulator can also be provided in case the valve 5 is connected to a distribution system having pressure higher than the valve working pressure.

A port 14 (also visible in Figure 3) is further provided for measuring the pressure in the distribution chamber 12. A joint 41 of the pressure controlling device 40 is connected to the port 14. The joint 41 can also advantageously be a joint of the push-in fitting type.

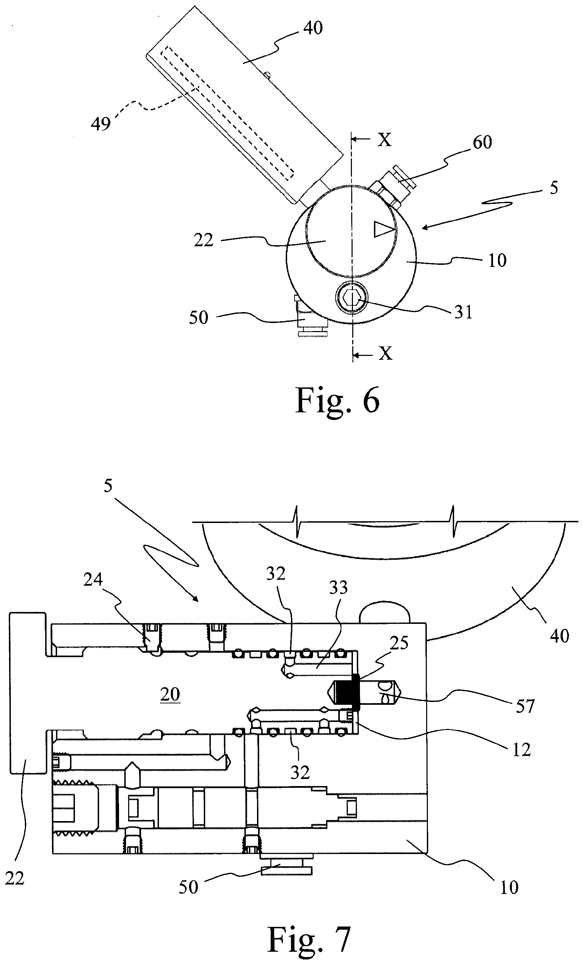

The pressure controlling device 40 consists of an electronic device provided with a programmable control unit 49 (Figure 6). The pressure controlling device 40 comprises a plurality of buttons 42 to manage the device functions, at least one alphanumeric digital display 43 to show the numeral values of pressure of the container 200 connected to the valve 5, and one or more light and/or acoustic signaling means 44 to signal the operation states of the valve 5 and/or pressure controlling device 40.

The programmable control unit of the pressure controlling device 40 comprises at least one circuit section to exchange data signals and/or driving signals in wireless or Wi-Fi mode with one or more remote monitoring apparatuses 300 (Figure 10).

In Figures 2, 3 and 4 the fluid passage channels in the valve body 10 are highlighted. The distribution chamber 12 depicted in Figure 2 starts with a threaded portion 12', with threading corresponding to the one 21 on the distribution member 20, and ends with a channel 57 communicating with the ports 14 and 16 through the channels 54 and 56, as it is evident from the sectional view of Figure 3. The pressurized fluid is fed to the chamber 12 through a channel 59 in communication with the inlet port 15 by a channel 51, as visible in Figure 4.

The chamber 13 wherein the vacuum generator device 30 is housed starts with a threaded portion 13' adapted to receive the threaded plug 31 and ends with a discharge channel 55 open outwardly, to evacuate the pressurized fluid crossing the vacuum generator device 30.

As it is evident from Figure 2, the chambers 12 and 13 are in communication with one another through the channels 52, 53, 58 and 61.

The distribution member 20 depicted in the sectional view of Figure 5 comprises, in its inside, a channel 32 and a channel 33 which communicate with the chamber 12 and the channel 57 when the distribution member 20 is installed in the distribution chamber 12. Additional inner channels 35, 36 and 37 allow the channel 32 to be bypassed. It is worth noting that the channels 32, 36 and 37 also comprise the circumferential grooves obtained on the outer surface of the distribution member 20, in addition to their radial length that is evident in Figure 5. Airtightness among the several circumferential grooves of the channels 32, 36 and 37 is ensured by elastic rings 38 of the O-ring type or the like.

In the view of Figure 5 the grooves 34' and 34", in which the positioning headless screw 24 is engaged in the various axial positions taken by the distribution member 20, as well as a seat 39 for the plug 25 are further highlighted. It is further highlighted the headless screw 2 closing the machined hole of the channel 35.

In the front view of Figure 6 a valve 5 in assembled condition is depicted, in which by a dashed line the programmable control unit 49 of the pressure controlling device 40 is highlighted.

The various operating conditions of a valve 5, as the so far described one, are depicted in the schematic views of Figures 7, 8 and 9.

In Figure 7 the valve 5 is in the closure condition, i.e. with the distribution member 20 completely screwed. The positioning headless screw 24 is not engaged in any of the grooves 34' or 34". The pressurized fluid fed through the joint 50 affects the channels 32, 33 and the chamber 12, but the plug 25 insulates the channel 57 from the pressurized fluid. In this condition, the channel 57 is therefore in fluid communication only with the pressure controlling device 40 and the container 200 (Figure 10), so that the pressure in the container 200 can be detected by the pressure controlling device 40 without being affected by possible leakages of the pressurized air fed to the valve 5.

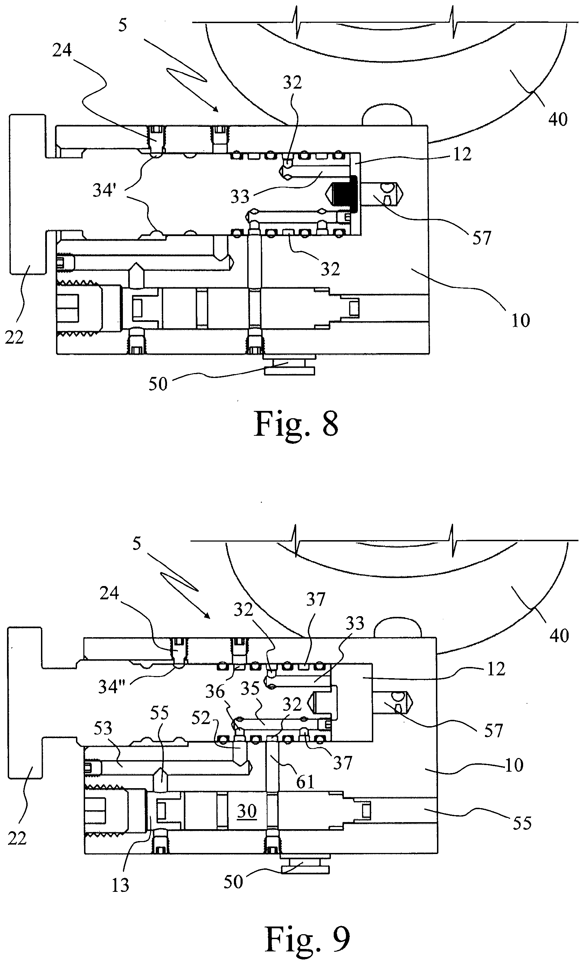

In Figure 8 the valve 5 is in a feeding condition of the pressurized fluid to a container 200, i.e. with the distribution member 20 partially unscrewed up to the axial position in which the positioning headless screw 24 engages the groove 34'. The pressurized fluid fed through the joint 50 affects the channels 32, 33 and the chamber 12. The latter is now in communication with the channel 57, which thus feeds the pressurized fluid to the pressure controlling device 40 and the container 200.

In Figure 9 the valve 5 is in suction condition of the pressurized fluid from the container 200 or, in other words, in the condition in which a depression condition is generated in the container 200. The distribution member 20 is unscrewed up to the axial position in which the positioning headless screw 24 engages the groove 34". The pressurized fluid fed through the joint 50 now affects the channels 35, 36 and 37 located inside the distribution member 20 and is transferred into the chamber 13 through the channels 52, 53 and 55 obtained inside the valve body 10. The pressurized fluid thus feeds the vacuum generator device 30 that, by Venturi effect, generates a depression condition through the channel 61 in fluid communication with the distribution chamber 12 through the channels 32 and 33, as well as the channel 57 communicating with the pressure controlling device 40 and the container 200. The pressurized fluid fed to the vacuum generator device 30 is ejected outwards through the channel 55.

In Figure 10 a plant for monitoring the state of the pneumatic seals 200 of the floating lids of a plurality of tanks for the wine preservation and maturation is schematically depicted. A valve 5 for the distribution of a pressurized fluid, for example air fed from a compressed air distribution system 100, is combined with the pneumatic seal 200 of each tank.

The plant comprises at least one remote control station 300 programmed for receiving the signals transmitted by the electronic pressure controlling devices 40 belonging to each valve 5 and for transmitting warning and/or alarm signals to one or more remote communication devices, for example portable devices 400. It is further possible to provide direct communication of signals and/or controls among the valves 5 and the portable devices 400.

Alternatively to or in replacement of the compressed air distribution system 100, also a single-acting pump 101 (depicted with dashed lines) can be combined with each valve 5, being able to autonomously feed pressurized air to the respective pneumatic seal 200.

Various changes can be made to the embodiments herein depicted without departing from the scope of the present invention as defined by the attached claims. For example, shape and size of the various joints can be different from the herein depicted ones. Likewise, the vacuum generator device 30 can also have a shape different from the so far depicted one by way of example, as well as the releasable stop means to stop the rotation of the knob can also be embodied differently than the headless screw 24 engaged in the grooves 34' and 34".

## Claims

1. A valve (5) for the distribution of a pressurized fluid, comprising:
- a valve body (10);
- at least one inlet port (15) to feed a pressurized fluid to the valve (5);
- at least one outlet port (16) to feed said pressurized fluid to a container (200) through a feed channel (56);
- at least one distribution member (20) movably housed in a distribution chamber (12) obtained in said valve body (10), wherein the distribution member (20) is movable between at least one predetermined closure position of the feed of the pressurized fluid to the valve (5), at least one predetermined feed position of the pressurized fluid to said container (200) and at least one predetermined suction position of the fluid from said container (200), wherein at least one vacuum generator device (30) is housed in the valve body (10) to suction the fluid from said container (200) following the feed of pressurized fluid to the valve (5) when said distribution member (20) is in said suction position of the fluid from said container (200), **characterized in that** said distribution chamber (12) ends with a channel (57) communicating with a pressure measuring port (14) and said outlet port (16), **in that** said distribution member (20) is axially movable in said distribution chamber (12) and is provided with a plug (25) at its end and **in that**, when the distribution member (20) is in said predetermined closure position of the pressurized fluid feed, said plug (25) insulates the channel (57) located at the end of the distribution chamber (12) from the pressurized fluid fed to the valve (5).

2. The valve according to claim 1, wherein said valve body (10) comprises at least one discharge channel (55) to evacuate in the atmosphere the pressurized fluid fed to said vacuum generator device (30) together with the fluid suctioned from said container (200).

3. The valve according to claim 1, wherein said distribution member (20) includes at least one knob (22) protruding outwardly from said valve body (10), said knob (22) being rotationally operable to axially move said distribution member (20) among said predetermined positions.

4. The valve according to claim 3, wherein the knob (22) of said distribution member (20) comprises at least one reference mark (23) to indicate the rotation position with respect to said valve body (10), and wherein releasable stop means (24) are provided to stop the rotation of said knob (22) at said predetermined positions.

5. The valve according to claim 1, wherein said distribution member (20) has a substantially cylindrical shape and includes at least one double- or multiple-start threaded portion (21) engaged with a corresponding threaded portion (12') obtained in said distribution chamber (12).

6. The valve according to claim 1, wherein at least one joint (50) provided with a one-way valve is connected to said at least one inlet port (15) to feed a pressurized fluid to the valve.

7. The valve according to claim 1, wherein at least one pressure regulator is connected to said at least one inlet port (15).

8. The valve according to claim 1, wherein at least one pressure controlling device (40) is connected to said pressure measuring port (14) through a measuring channel (54).

9. The valve according to claim 8, wherein said pressure controlling device (40) is an electronic device including a programmable control unit (49), a plurality of buttons (42) to manage the functions of the pressure controlling device (40), at least one alphanumeric digital display (43) to show numerical values and one or more light and/or acoustic signaling means (44) to signal the operating states of the valve (5) and/or pressure controlling device (40).

10. The valve according to claim 8 or 9, wherein said programmable control unit (49) comprises at least one circuit section to exchange data signals and/or driving signals in wireless or Wi-Fi mode with one or more remote monitoring apparatuses (300, 400).

11. A plant with a plurality of tanks for the wine preservation and maturation, the plant further comprising a system for monitoring the state of pneumatic seals (200) of floating lids of the plurality of tanks, the pneumatic seal (200) of each of said tanks having an associated valve (5) for distributing a pressurized fluid according to one of claims 1 to 10, each valve (5) being connected to a pneumatic seal (200) and a supply (100, 101) of pressurized fluid, **characterized by** comprising at least one remote control station (300) programmed to receive the signals transmitted by said electronic pressure controlling devices (40) belonging to each valve and to transmit warning and/or alarm signals to one or more remote communication devices (400).

12. The plant according to claim 11, wherein said pressurized fluid supply is constituted by a compressed-air distribution system (100).

13. The plant according to claim 11, wherein said pressurized fluid supply is constituted by a single-acting pump (101) combined with said tank for the wine preservation and maturation.

## Patentansprüche

1. Ventil (5) zur Verteilung eines unter Druck stehenden Fluids, umfassend:
- einen Ventilkörper (10);
- mindestens eine Einlassöffnung (15), um dem Ventil (5) ein unter Druck stehendes Fluid zuzuführen;
- mindestens eine Auslassöffnung (16), um das unter Druck stehende Fluid einem Behälter (200) über einen Zufuhrkanal (56) zuzuführen;
- mindestens ein Verteilerelement (20), das beweglich in einer Verteilerkammer (12) untergebracht ist, die in dem Ventilkörper (10) erhalten ist, wobei das Verteilungselement (20) zwischen mindestens einer vorbestimmten Verschlussposition der Zufuhr des unter Druck stehenden Fluids zu dem Ventil (5), mindestens einer vorbestimmten Zufuhrposition des unter Druck stehenden Fluids zu dem Behälter (200) und mindestens einer vorbestimmten Saugposition des Fluids aus dem Behälter (200) beweglich ist, wobei mindestens eine Vakuumgeneratorvorrichtung (30) in dem Ventilkörper (10) untergebracht ist, um das Fluid aus dem Behälter (200) nach der Zufuhr von unter Druck stehendem Fluid zum Ventil (5) abzusaugen, wenn sich das Verteilungselement (20) in der Saugposition des Fluids aus dem Behälter (200) befindet, **dadurch gekennzeichnet, dass** die Verteilerkammer (12) mit einem Kanal (57) endet, der mit einer Druckmessöffnung (14) und der Auslassöffnung (16) kommuniziert, indem das Verteilungselement (20) in der Verteilungskammer (12) axial beweglich ist und mit einem Stopfen (25) an seinem Ende versehen ist, und dadurch, dass, wenn sich das Verteilerelement (20) in der vorbestimmten Verschlussposition der Zufuhr des unter Druck stehenden Fluids befindet, der Stopfen (25) den Kanal (57), der sich am Ende der Verteilerkammer (12) befindet, von dem unter Druck stehenden, zum Ventil (5) geführten Fluid isoliert.

2. Ventil nach Anspruch 1, wobei der Ventilkörper (10) mindestens einen Auslasskanal (55) umfasst, um das unter Druck stehende, der Vakuumgeneratorvorrichtung (30) zugeführte Fluid zusammen mit dem aus dem Behälter (200) angesaugten Fluid in der Atmosphäre zu evakuieren.

3. Ventil nach Anspruch 1, wobei das Verteilungselement (20) mindestens einen Knopf (22) enthält, der nach außen aus dem Ventilkörper (10) herausragt, wobei der Knopf (22) drehbar betätigt werden kann, um das Verteilungselement (20) axial zwischen den besagten vorgegebenen Positionen zu bewegen.

4. Ventil nach Anspruch 3, wobei der Knopf (22) des Verteilungselements (20) mindestens eine Referenzmarke (23) umfasst, um die Drehposition in Bezug auf den Ventilkörper (10) anzuzeigen, und wobei lösbare Stoppmittel (24) vorgesehen sind, um die Drehung des Knopfes (22) an den vorbestimmten Positionen zu stoppen.

5. Ventil nach Anspruch 1, wobei das Verteilungselement (20) eine im Wesentlichen zylindrische Form aufweist und mindestens einen Doppel- oder Mehrfachstart-Gewindeabschnitt (21) umfasst, der mit einem entsprechenden Gewindeabschnitt (12') in Eingriff steht, der in der Verteilerkammer (12) erhalten ist.

6. Ventil nach Anspruch 1, wobei mindestens eine mit einem Einwegventil versehene Verbindung (50) mit der mindestens einen Einlassöffnung (15) verbunden ist, um dem Ventil ein unter Druck stehendes Fluid zuzuführen.

7. Ventil nach Anspruch 1, wobei mindestens ein Druckregler mit der mindestens einen Einlassöffnung (15) verbunden ist.

8. Ventil nach Anspruch 1, wobei mindestens eine Drucksteuervorrichtung (40) über einen Messkanal (54) mit dem Druckmessanschluss (14) verbunden ist.

9. Ventil nach Anspruch 8, wobei die Drucksteuervorrichtung (40) eine elektronische Vorrichtung ist, die eine programmierbare Steuereinheit (49), eine Vielzahl von Tasten (42), um zumindest die Funktionen der Drucksteuervorrichtung (40) zu verwalten, mindestens eine alphanumerische Digitalanzeige (43) zur Anzeige von Zahlenwerten und eine oder mehrere Licht- und/oder akustische Signalmittel (44) zur Signalisierung der Betriebszustände des Ventils (5) und/oder der Druckregelvorrichtung (40) enthält.

10. Ventil nach Anspruch 8 oder 9, wobei die programmierbare Steuereinheit (49) mindestens einen Schaltungsabschnitt umfasst, um Datensignale und/oder Antriebssignale im drahtlosen oder Wi-Fi-Modus mit einer oder mehreren Fernüberwachungsvorrichtungen (300, 400) auszutauschen.

11. Anlage mit einer Vielzahl von Tanks zur Weinkonservierung und -reifung, wobei die Anlage ferner ein System zum Überwachen des Zustands von pneumatischen Dichtungen (200) von schwimmenden Deckeln der Vielzahl von Tanks umfasst, wobei die pneumatischen Dichtung (200) von jedem der Tanks ein zugeordnetes Ventil (5) zum Verteilen eines unter Druck stehenden Fluids gemäß einem der Ansprüche 1 bis 10 umfasst, wobei jedes Ventil (5) mit einer pneumatischen Dichtung (200) und einer Zufuhr (100, 101) von unter Druck stehendem Fluid verbunden ist, **dadurch gekennzeichnet, dass** sie mindestens eine Fernbedienungsstation (300) umfasst, die so programmiert ist, dass sie die von den zu jedem Ventil gehörenden elektronischen Druckregelvorrichtungen (40) gesendeten Signale empfängt und Warn- und/oder Alarmsignale an eine oder mehrere Fernkommunikationsvorrichtungen (400) sendet.

12. Anlage nach Anspruch 11, wobei die Druckfluidversorgung aus einem Druckluftverteilungssystem (100) besteht.

13. Anlage nach Anspruch 11, wobei die Druckfluidversorgung aus einer Single-Action-Pumpe (101) besteht, die mit dem Tank zur Weinkonservierung und -reifung kombiniert ist.

## Revendications

1. Soupape (5) destinée à la distribution d'un fluide sous pression, comprenant :
- un corps de soupape (10) ;
- au moins un orifice d'entrée (15) pour fournir un fluide sous pression à la soupape (5) ;
- au moins un orifice de sortie (16) pour fournir ledit fluide sous pression à un récipient (200) à travers un canal d'alimentation (56) ;
- au moins un élément de distribution (20) logé de manière mobile dans une chambre de distribution (12) obtenue dans ledit corps de soupape (10), dans laquelle l'élément de distribution (20) est mobile entre au moins une position de fermeture prédéterminée de l'alimentation en fluide sous pression de la soupape (5), au moins une position d'alimentation prédéterminée du fluide sous pression audit récipient (200) et au moins une position d'aspiration prédéterminée du fluide dudit récipient (200), dans laquelle au moins un dispositif générateur de vide (30) est logé dans le corps de soupape (10) pour aspirer le fluide dudit récipient (200) suivant l'alimentation du fluide sous pression à la soupape (5) lorsque ledit élément de distribution (20) est dans ladite position d'aspiration du fluide dudit récipient (200), **caractérisée en ce que** ladite chambre de distribution (12) se termine par un canal (57) communiquant avec un orifice de mesure de pression (14) et ledit orifice de sortie (16), **en ce que** ledit élément de distribution (20) est mobile axialement dans ladite chambre de distribution (12) et est doté d'un bouchon (25) à son extrémité et **en ce que**, lorsque l'élément de distribution (20) est dans ladite position de fermeture prédéterminée de l'alimentation de fluide sous pression, ledit bouchon (25) isole le canal (57) situé à l'extrémité de la chambre de distribution (12) du fluide sous pression fourni à la soupape (5).

2. Soupape selon la revendication 1, dans laquelle ledit corps de soupape (10) comprend au moins un canal d'évacuation (55) pour évacuer dans l'atmosphère le fluide sous pression fourni audit dispositif générateur de vide (30) conjointement avec le fluide aspiré dudit récipient (200).

3. Soupape selon la revendication 1, dans laquelle ledit élément de distribution (20) inclut au moins un bouton (22) faisant saillie vers l'extérieur depuis ledit corps de soupape (10), ledit bouton (22) étant actionnable en rotation pour déplacer axialement ledit élément de distribution (20) parmi lesdites positions prédéterminées.

4. Soupape selon la revendication 3, dans laquelle le bouton (22) dudit élément de distribution (20) comprend au moins une marque de référence (23) pour indiquer la position de rotation par rapport audit corps de soupape (10), et dans laquelle des moyens d'arrêt (24) libérables sont pourvus pour arrêter la rotation dudit bouton (22) dans lesdites positions prédéterminées.

5. Soupape selon la revendication 1, dans laquelle ledit élément de distribution (20) présente une forme sensiblement cylindrique et inclut au moins une portion à deux ou multiples filets (21) mise en prise avec une portion filetée correspondante (12') obtenue dans ladite chambre de distribution (12).

6. Soupape selon la revendication 1, dans laquelle au moins un joint (50) pourvu d'une soupape une voie est raccordé audit au moins un orifice d'entrée (15) pour fournir un fluide sous pression à la soupape.

7. Soupape selon la revendication 1, dans laquelle au moins un régulateur de pression est raccordé audit au moins un orifice d'entrée (15).

8. Soupape selon la revendication 1, dans laquelle au moins un dispositif de commande de pression (40) est raccordé audit orifice de mesure de pression (14) à travers un canal de mesure (54).

9. Soupape selon la revendication 8, dans laquelle ledit dispositif de commande de pression (40) est un dispositif électronique incluant une unité de commande programmable (49), une pluralité de boutons (42) pour gérer les fonctions du dispositif de commande de pression (40), au moins un affichage numérique alphanumérique (43) pour représenter des valeurs numériques et un ou plusieurs moyens de signalement lumineux et/ou acoustiques (44) pour signaler les états fonctionnels de la soupape (5) et/ou du dispositif de commande de pression (40).

10. Soupape selon la revendication 8 ou 9, dans laquelle ladite unité de commande (49) programmable comprend au moins une section de circuit pour échanger des signaux de données et/ou des signaux d'entraînement dans le mode sans fil ou Wi-Fi avec un ou plusieurs appareils de télésurveillance (300, 400).

11. Installation avec une pluralité de réservoirs pour la préservation et la maturation du vin, l'installation comprenant en outre un système de surveillance de l'état de joints pneumatiques (200) de couvercles flottants de la pluralité de réservoirs, le joint pneumatique (200) de chacun desdits réservoirs présentant une soupape associée (5) pour la distribution d'un fluide sous pression selon l'une des revendications 1 à 10, chaque soupape (5) étant raccordée à un joint pneumatique (200) et à une alimentation (100, 101) de fluide sous pression, **caractérisée en ce qu'**il comprend au moins une station de télécommande (300) programmée pour recevoir les signaux transmis par lesdits dispositifs de commande de pression électronique (40) appartenant à chaque soupape et pour transmettre des signaux d'avertissement et/ou d'alarme aux un ou plusieurs dispositifs de télécommunication (400).

12. Installation selon la revendication 11, dans laquelle ladite alimentation en fluide sous pression est constituée par un système de distribution d'air comprimé (100).

13. Installation selon la revendication 11, dans laquelle ladite alimentation en fluide sous pression est constituée par une pompe à simple effet (101) combinée audit réservoir pour la préservation et la maturation du vin.
